# EUROPÄISCHE PATENTSCHRIFT

(11) **EP 1 183 939 B1**
(45) Veröffentlichungstag und Bekanntmachung des Hinweises auf die Patenterteilung: **02.03.2005**
(21) Anmeldenummer: 01118948.7
(22) Anmeldetag: 04.08.2001
(51) Int. Cl.: A01D 61/00, A01D 89/00

(54) **Rotationsförderer mit Fingern**
Rotatable transporting device with fingers
Transporteur rotatif muni de doigts

(30) Priorität: 30.08.2000 DE 10042499
(43) Veröffentlichungstag der Anmeldung: 06.03.2002
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke, Dr.

(56) Entgegenhaltungen:
- EP-A- 0 236 106
- FR-A- 1 495 238
- FR-A- 2 792 496
- US-A- 2 755 912
- US-A- 4 297 760
- DATABASE WPI Section PQ, Week 198828 Derwent Publications Ltd., London, GB; Class P12, AN 1988-196613 XP002183178 & SU 1 360 685 A (SARAT AGRIC MECH), 23. Dezember 1987 (1987-12-23)

## Beschreibung

Die Erfindung betrifft einen Rotationsförderer mit einem trommelförmigen Mantel, der mit einem Drehantrieb koppelbar ist, einer im Inneren des Mantels angeordneten, exzentrischen Achse, sowie einer Vielzahl von Fingern, die sich durch ihnen zugeordnete Öffnungen des Mantels erstrecken, in denen jeweils ein Finger verschiebbar gelagert ist, wobei jeweils mehrere in axialer Richtung nebeneinander angeordnete Finger an drehbar auf der Achse gelagerten Fingerträgern befestigt sind.

In der US 675 418 A ist ein oberhalb eines Strohschüttlers eines Mähdreschers angeordneter Rotationsförderer offenbart, der aus einem trommelförmigem Mantel und sich durch Öffnungen im Mantel nach außen erstreckenden Fingern aufgebaut ist. Die Finger sind drehbar auf einer exzentrischen, ortsfesten Achse gelagert, so dass die Länge, um die die Finger vom Mantel abstehen, von der Drehstellung des angetriebenen, rotierenden Mantels abhängt, der die Finger beim Drehen mit sich führt. Auf der Achse sind vier Gruppen von Fingern axial nebeneinander angeordnet, wobei jede Gruppe drei Finger umfasst, die jeweils eine von drei um den Umfang des Mantels verteilten, um 120° zueinander versetzten Öffnungen im Mantel durchdringen. Die Finger jeder Gruppe sind separat auf der Achse drehbar gelagert, wozu U-förmige Bleche mit von der Achse durchdrungenen Bohrungen vorgesehen sind.

Ein ähnlicher Rotationsförderer ist in der GB 612 962 A offenbart. Jeweils mehrere Finger einer Gruppe sind jedoch an kreisförmigen Halterungen gelagert, die axial nebeneinander und drehbar auf die exzentrische Achse aufgesetzt sind. Bis auf einen Finger, der starr angebracht ist, um die Halterung bei der Drehung des Mantels auf der Achse mitzudrehen, sind alle Finger separat schwenkbar an der Halterung angelenkt.

Die GB 1 151 119 A beschreibt einen Rotationsförderer nach dem Oberbegriff des Anspruchs 1, bei dem jeweils zwei nebeneinander angeordnete Finger an einer Halterung befestigt sind, die drehbar auf die exzentrische Achse aufgeschoben sind.

Die DE 2 103 981 A offenbart einen oberhalb der Strohschüttler eines Mähdreschers angeordneten Rotationsförderer zur Intensivierung der Restkörnerausscheidung, bei dem elastische Zinken auf einer Kurvenbahn gesteuert werden.

In der DE 31 11 177 A wird ein Rotationsförderer mit zwei diametral gegenüberliegenden Gruppen von Fingern beschrieben. Die Finger sind auf axial orientierten Traversen angeordnet, welche um eine von den Fingern in Drehrichtung versetzte, parallel zur Längsachse des Rotationsförderers orientierte Achse schwenkbar sind. Die Winkelstellung der Traversen wird durch Pleuelstangen gesteuert, die mit einer feststehenden Achse verbunden sind.

Die US 2 755 912 A schlägt eine Querförderschnecke für einen Mähdrescher vor, in deren vor dem Schrägförderer angeordnetem Bereich vier um das Rohr der Querförderschnecke verteilte Klingen mit wellenförmigen Außenkanten angeordnet sind. Die Klingen sind an Drehachsen gelagert, die sich an der Innenwand des Rohrs befinden und erstrecken sich durch je einen langgestreckten Spalt in der Wand des Rohrs nach außen. Sie werden über Hebel bewegt, die anderen Endes an einer exzentrischen Achse gelagert sind. Dadurch erhält man eine winkelabhängige Steuerung der Klingen. Als nachteilig ist anzusehen, dass durch den Spalt Material in das Innere des Rohrs eindringen und den Mechanismus blockieren kann. Außerdem eignen sich diese Klingen wenig zur Förderung von Halmgut, da sie nur an seiner Oberfläche entlang gleiten und nicht - wie Finger - darin eingreifen können.

Bei der Förderung von Erntegut sind unter bestimmten Umständen Trommelförderer mit einer möglichst hohen Anzahl von Fingern wünschenswert, beispielsweise in der Mitte von quer an Schneidwerken angebauten Schneckenförderern oder bei Förderern, die oberhalb der Strohschüttler von Mähdreschern angeordnet sind. Wenn die Halterungen der Finger in axialer Richtung auf der exzentrischen Achse nebeneinander angeordnet sind, wie in der GB 1 151 119 A, ist die Anzahl der Finger durch die Breite der Halterungen begrenzt. Die in der US 675 418 A offenbarte Anbringung erlaubt eine Vergrößerung der Anzahl der Finger, hat jedoch den Nachteil, dass ein Austausch einer eventuell defekten Halterung eine komplette Demontage des Förderers erforderlich macht, was sehr zeitaufwändig und daher kostspielig ist. In der GB 612 962 A sind ebenfalls Finger sternförmig angeordnet, jedoch ist fast jedem Finger eine eigene drehbare Befestigung an der ebenfalls drehbar auf die Achse aufgesetzten Halterung zugeordnet, was einen relativ hohen Aufwand bedeutet. Die in der DE 2 103 981 A offenbarte Kurvenbahn zur Steuerung von Zinken und die Steuerung durch eine Pleuelstange, wie sie in der DE 32 11 177 A vorgeschlagen wird, sind hingegen konstruktiv wesentlich aufwändiger als eine Lagerung der Finger auf einer exzentrischen Welle.

Die der Erfindung zugrunde liegende Aufgabe wird darin gesehen, einen einfach aufgebauten Trommelförderer bereitzustellen, der mit einer hohen Anzahl an Fingern versehen werden kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Rotationsförderer, an dem innerhalb eines trommelförmigen Mantels mehrere sich durch Öffnungen im Mantel erstreckende - vorzugsweise starre - Finger nebeneinander an einem Fingerträger befestigt sind. Der Fingerträger ist auf einer exzentrischen Achse drehbar gelagert. Der Mantel ist mittels eines Antriebs in Drehung versetzbar, um Material zu fördern, während die Achse in der Regel ortsfest ist. Es ist aber auch denkbar, die Achse verdrehbar zu gestalten, um das Förderverhalten variieren zu können. Der Mantel führt die Finger, die in den Öffnungen des Mantels verschiebbar gelagert sind, bei seiner Drehung mit. Die Länge, um die die Finger über den Mantel hinausragen, hängt wegen der Exzentrizität der Achse von ihrer Winkelstellung ab. Die Erfindung schlägt vor, mehrere Fingerträger in Umfangsrichtung (azimutal) um die Achse zu verteilen. Somit befinden sich an wenigstens einer axialen Position der Achse wenigstens zwei Fingerträger mit daran angebrachten Fingern in unterschiedlichen Winkelstellungen.

Dadurch, dass einer Stelle der Achse mehrere Fingerträger mit verschiedenen Drehwinkeln zugeordnet sind, erhöht man bei geringem Aufwand die Anzahl der Finger, die an der Achse angebracht werden können. Auf diese Weise wird die Förderwirkung des Rotationsförderers verbessert.

Vorzugsweise sind die Fingerträger nicht nur an einer Stelle, sondern über einen Teil der Breite des trommelförmigen Mantels, der mindestens dem Abstand zweier in axialer Richtung nebeneinander angeordneter Finger entspricht, um die Achse verteilt. Um den Rotationsförderer mit einer möglichst hohen Zahl an Fingern versehen zu können, ist jedoch bevorzugt, wenn die Fingerträger über den mit Fingern versehenen Teil der Breite des Mantels um den Umfang der Achse verteilt werden.

Die Fingerträger können in axialer Richtung zueinander versetzt angeordnet sein. Dadurch wird möglich, gleichartige Fingerträger zu verwenden, die aus Fertigungs- und Lagerhaltungsgründen vorteilhaft sind und wegen des axialen Versatzes an unterschiedlichen Stellen auf der Achse gelagert werden können. In der Regel sind dann auch die Finger in axialer Richtung versetzt. Sollen jeweils Gruppen von Fingern dieselbe axiale Position haben, können gleichartige, zueinander axial versetzte Fingerträger verwendet werden, die mehrere, in axialer Richtung versetzte Befestigungsstellen für die Finger haben, wobei jeweils nur ein Teil der Befestigungsstellen mit Fingern belegt ist. Alternativ verwendet man unterschiedliche bzw. in umgekehrter Richtung an der Achse befestigte Fingerträger, um zu erreichen, dass Finger einer Gruppe dieselbe axiale Position einnehmen.

Zur Befestigung der Fingerträger an der Achse können ringförmige Elemente dienen, welche die Achse umschließen. Jeder Fingerträger weist in der Regel mehrere derartige, axial beabstandete Elemente auf. Die Elemente können geschlossen und auf die Achse aufschiebbar sein. Um einen Austausch eines defekten Fingerträgers zu erleichtern, ist aber bevorzugt, dass die Elemente schließbar sind, um sie öffnen und in radialer Richtung von der Achse abnehmen zu können, ohne den Rotationsförderer zu demontieren.

Um die Anzahl der Bauelemente des Rotationsförderers gering zu halten, bietet sich an, die Länge der Fingerträger so zu wählen, dass sie sich im wesentlichen über die gesamte Breite des Mantels (oder dessen mit Fingern versehenen Bereichs) erstrecken. Denkbar ist aber auch, mehrere kürzere Fingerträger axial nebeneinander anzuordnen.

Beim Einsatz in der Landwirtschaft ist es denkbar, dass die Finger oder die Fingerträger beschädigt werden. Um die übrigen Finger und/oder den Fingerträger in einem derartigen Fall weiter verwenden zu können, ist vorgeschlagen, die Finger lösbar am Fingerträger anzubringen. Dazu können an sich bekannte Einrastverbindungen dienen, insbesondere Bajonettbefestigungen. Besonders einfach ist es, die Finger an einem Ende mit einem Gewinde zu versehen, das in ein entsprechendes Gewinde des Fingerträgers eingeschraubt wird. Die Schraubverbindung kann durch eine Kontermutter gesichert werden.

Der erfindungsgemäße Rotationsförderer eignet sich insbesondere zur Verwendung in der Landwirtschaft. Er kann an Schneidwerken von Mähdreschern benutzt werden, um das geerntete Gut in einen Schrägförderer einzuführen. Auch kann er oberhalb von Strohschüttlern eines Mähdreschers zum Einsatz kommen, um die Ausscheidung der Restkörner zu verbessern.

In der Zeichnung ist ein nachfolgend näher beschriebenes Ausführungsbeispiel der Erfindung dargestellt. Es zeigt:
- Fig. 1: eine perspektivische Ansicht eines erfindungsgemäßen Rotationsförderers,
- Fig. 2: eine Seitenansicht des Rotationsförderers der Figur 1 mit abgenommenem Mantel,
- Fig. 3: eine Seitenansicht eines Fingerträgers, und
- Fig. 4: einen Schnitt durch den Rotationsförderer.

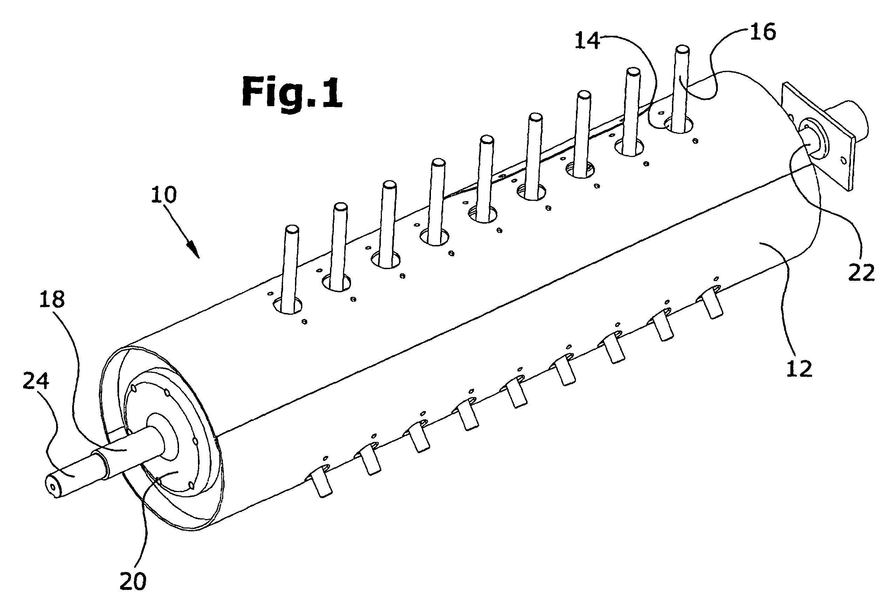

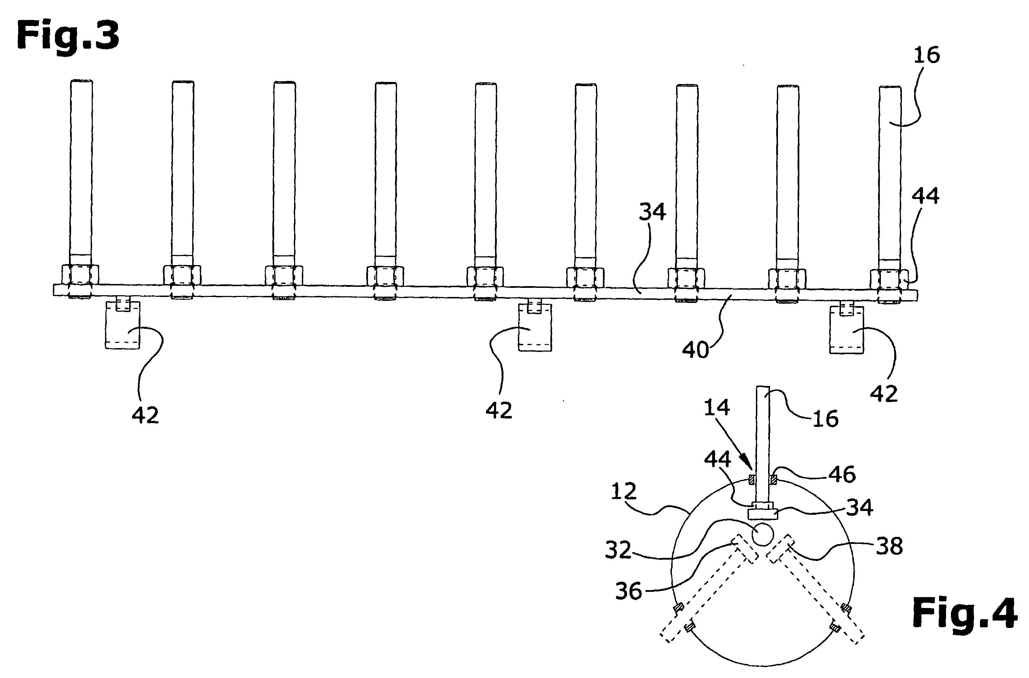

Der in Figur 1 dargestellte Rotationsförderer 10 besteht in seinem grundsätzlichem Aufbau aus einem trommelförmigem Mantel 12, über dessen Länge und Umfang drei um jeweils 120° versetzte Reihen von Öffnungen 14 verteilt sind, durch die sich Finger 16 erstrecken. In die Öffnungen sind Gleitlagerungen für die Finger 16 einsetzbar (s. Figur 4), die in Figur 1 aus Gründen der Übersichtlichkeit nicht eingezeichnet sind. Der Mantel 12 ist durch (einen in Figur 1 nicht eingezeichneten) Antrieb, der an einer Hohlwelle 18 angreift, die am links eingezeichneten Rand des Rotationsförderers 10 drehfest mit einem Flansch 20 des Mantels 12 verbunden ist, in Drehung versetzbar, um Material zu fördern. Ein erster Achsstummel 22 am rechten Rand des Rotationsförderers 10 ist drehfest an einem Gehäuse oder dergleichen abgestützt, wie auch ein innerhalb der Hohlwelle 18 angeordneter zweiter Achsstummel 24.

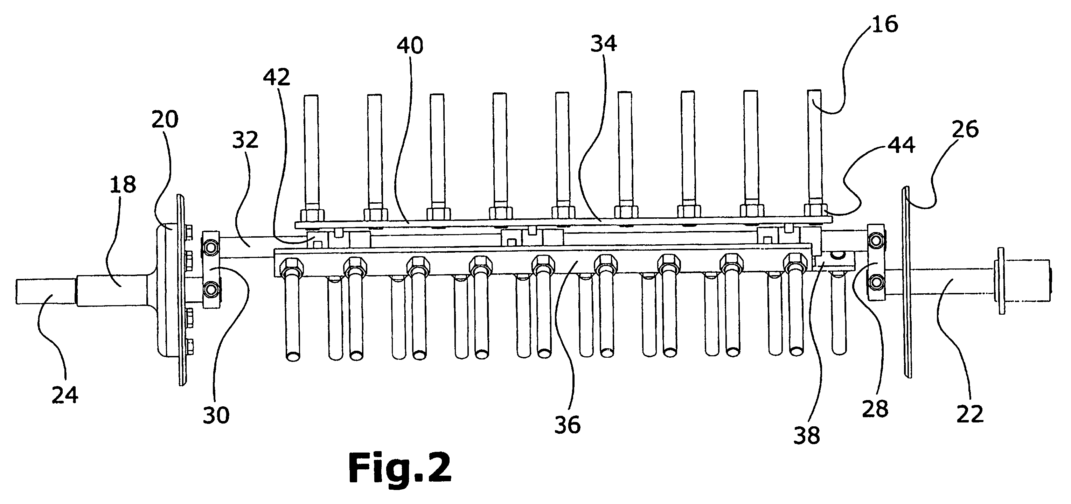

Anhand der Figur 2 ist erkennbar, dass der rechts eingezeichnete Rand des Mantels 12 sich auf einer Scheibe 26 abstützt, die drehbar auf dem ersten Achsstummel 20 gelagert ist. Der Mantel 12 ist somit durch die Hohlwelle 18 über den Flansch 20 in Drehung versetzbar und ist mittels des Flansches 20 und der Scheibe 26 drehbar auf den nicht rotierenden Achsstummeln 22 und 24 gelagert.

Mit den Achsstummeln 22 und 24 ist jeweils ein rechtwinklig dazu verlaufender Kurbelarm 28, 30 verbunden. Zwischen den anderen Enden der Kurbelarme 28, 30 erstreckt sich eine parallel zur Mittelachse des Mantels 12 verlaufende, jedoch dazu exzentrische Achse 32. An der Achse 32 sind drei Fingerträger 34, 36, 38 drehbar gelagert, die sich über den mit Fingern 16 versehenen Teil der Breite der Achse 32 erstrecken. Die gleichartigen Fingerträger 34, 36, 38 sind zueinander um jeweils etwa 120° versetzt und um den Umfang der Achse 32 verteilt. Sie sind auch in axialer Richtung um die Breite ringförmiger Elemente 42 zueinander versetzt angebracht.

Die in Figur 3 in größerem Maßstab dargestellten Fingerträger 34, 36, 38 bestehen aus einem Körper 40 mit rechteckförmigem Querschnitt und drei ringförmigen Elementen 42, die die Achse 32 umschließen. Jeweils ein ringförmiges Element 42 ist an einem Ende der Fingerträger 34, 36, 38 angebracht, während sich ein ringförmiges Element 42 etwa in der Mitte der Fingerträger 34, 36, 38 befindet. Die Fingerträger 34, 36, 38 sind auf die Achse 32 aufgeschoben. Über die Länge der Fingerträger 34, 36, 38 sind jeweils neun nebeneinander angeordnete Finger 16 verteilt. Die Finger 16 sind an ihrem inneren Ende mit einem Gewinde versehen, das in ein entsprechendes Gewinde im Körper 40 eingeschraubt ist. Die Befestigung der Finger 16 am Körper 40 wird durch je eine Kontermutter 44 gesichert.

Anhand der Figur 4 ist erkennbar, dass die Fingerträger 34, 36, 38 um den Umfang der Achse 32 verteilt sind. Bei einer Rotation des Mantels 12 werden die Finger 16, die durch Gleitlagerungen 46 in den Öffnungen 14 verschiebbar gelagert sind, rotativ mitgeführt. Wegen der exzentrischen Position der Achse 32 relativ zum Mantel 12 hängt die Länge, um die die Finger 16 über den Mantel 12 hinausragen, von der jeweiligen Drehstellung der Finger 16 ab.

Die Verwendung von Fingerträgern 34, 36, 38, die um den Umfang der exzentrischen Walze 32 verteilt sind, ermöglicht auf einfache Weise eine Vergrößerung der Anzahl der Finger 16 des Rotationsförderers 10, was bei gleicher Drehzahl eine Verbesserung der Förderwirkung zur vorteilhaften Folge hat.

## Patentansprüche

1. Rotationsförderer (10) mit einem trommelförmigen Mantel (12), der mit einem Drehantrieb koppelbar ist, einer im Inneren des Mantels (12) angeordneten, exzentrischen Achse (32), sowie einer Vielzahl von Fingern (16), die sich durch ihnen zugeordnete Öffnungen (14) des Mantels (12) erstrecken, in denen jeweils ein Finger (16) verschiebbar gelagert ist, wobei jeweils mehrere in axialer Richtung nebeneinander angeordnete Finger (16) an drehbar auf der Achse (32) gelagerten Fingerträgern (34, 36, 38) befestigt sind, **dadurch gekennzeichnet, dass** an wenigstens einer Stelle der Achse (32) mehrere Fingerträger (34, 36, 38) um den Umfang der Achse (32) verteilt sind.

2. Rotationsförderer (10) nach Anspruch 1, **dadurch gekennzeichnet, dass** über den mit Fingern (16) versehenen Teil der Breite des Mantels (12) mehrere Fingerträger (34, 36, 38) um die Achse (32) verteilt sind.

3. Rotationsförderer (10) nach Anspruch 1 oder 2, **dadurch gekennzeichnet, dass** die Fingerträger (34, 36, 38) in axialer Richtung relativ zueinander versetzt sind.

4. Rotationsförderer (10) nach einem der Ansprüche 1 bis 3, **dadurch gekennzeichnet, dass** die Fingerträger (34, 36, 38) gleichartig sind.

5. Rotationsförderer (10) nach einem der Ansprüche 1 bis 4, **dadurch gekennzeichnet, dass** die Fingerträger (34, 36, 38) durch mehrere, axial voneinander beabstandete ringförmige Elemente (42) auf der Achse (32) gelagert sind.

6. Rotationsförderer (10) nach einem der Ansprüche 1 bis 5, **dadurch gekennzeichnet, dass** die Fingerträger (34, 36, 38) sich über den mit Fingern (16) versehenen Teil der Breite des Mantels (12) erstrecken.

7. Rotationsförderer (10) nach einem der Ansprüche 1 bis 6, **dadurch gekennzeichnet, dass** die Finger (16) lösbar am Fingerträger (34, 36, 38) befestigt sind.

8. Rotationsförderer (10) nach Anspruch 7, **dadurch gekennzeichnet, dass** die Finger (16) in Öffnungen des Fingerträgers (34, 36, 38) eingeschraubt sind.

9. Rotationsförderer (10) nach Anspruch 8, **dadurch gekennzeichnet, dass** die Finger (16) durch Kontermuttern (44) am Fingerträger (34, 36, 38) gesichert sind.

10. Mähdrescher mit einem Rotationsförderer (10) nach einem der vorhergehenden Ansprüche, wobei der Rotationsförderer (10) am Schneidwerk oder oberhalb der Strohschüttler angebracht ist.

## Claims

1. Rotary transporting device (10) with a drum-like casing (12), which can be . coupled to a rotary drive, an eccentric axle (32) arranged inside the casing (12), as well as a plurality of fingers (16), which extend through openings (14) of the casing (12) allocated to them, in which openings a respective finger (16) is displaceably disposed, wherein several fingers (16) arranged next to one another in axial direction are respectively fastened to finger supports (34, 36, 38) rotatably disposed on the axle (32), **characterised in that** at at least one location of the axle (32) several finger supports (34, 36, 38) are distributed around the periphery of the axle (32).

2. Rotary transporting device (10) according to Claim 1, **characterised in that** over the portion of the width of the casing (12) provided with fingers (16), several finger supports (34, 36, 38) are distributed around the axle (32).

3. Rotary transporting device (10) according to Claim 1 or 2, **characterised in that** the finger supports (34, 36, 38) are staggered relative to one another in axial direction.

4. Rotary transporting device (10) according to one of Claims 1 to 3, **characterised in that** the finger supports (34, 36, 38) are of like type.

5. Rotary transporting device (10) according to one of Claims 1 to 4, **characterised in that** the finger supports (34, 36, 38) are disposed on the axle (32) by means of several axially spaced ring-shaped elements (42).

6. Rotary transporting device (10) according to one of Claims 1 to 5, **characterised in that** the finger supports (34, 36, 38) extend over the portion of the width of the casing (12) provided with fingers (16).

7. Rotary transporting device (10) according to one of Claims 1 to 6, **characterised in that** the fingers (16) are detachably fastened to the finger support (34, 36, 38).

8. Rotary transporting device (10) according to Claim 7, **characterised in that** the fingers (16) are screwed into openings of the finger support (34, 36, 38).

9. Rotary transporting device (10) according to Claim 8, **characterised in that** the fingers (16) are secured on the finger support (34, 36, 38) by counternuts (44).

10. Combine-harvester with a rotary transporting device (10) according to one of the preceding claims, wherein the rotary transporting device (10) is attached to the cutting mechanism or above the straw rocker.

## Revendications

1. Convoyeur rotatif (10) comportant un corps (12) en forme de tambour, qui peut être couplé à un système d'entraînement rotatif, un axe (32) excentré agencé à l'intérieur du corps (12), ainsi qu'une pluralité de doigts (16), qui passent à travers des orifices (14) du corps (12) qui sont associés à ceux-ci et dans lesquels chaque doigt (16) est logé de manière mobile, plusieurs doigts (16) juxtaposés dans la direction axiale étant fixés contre des porte-doigt (34, 36, 38) montés rotatifs sur l'axe (32), **caractérisé en ce que**, dans au moins une zone de l'axe (32), plusieurs porte-doigt (34, 36, 38) sont répartis autour du pourtour de l'axe (32).

2. Convoyeur rotatif (10) selon la revendication 1, **caractérisé en ce que**, dans la partie, munie de doigts (16), de la largeur du corps (12), plusieurs porte-doigt (34, 36, 38) sont répartis autour de l'axe (32).

3. Convoyeur rotatif (10) selon la revendication 1 ou 2, **caractérisé en ce que** les porte-doigt (34, 36, 38) sont décalés les uns par rapport aux autres dans la direction axiale.

4. Convoyeur rotatif (10) selon l'une quelconque des revendications 1 à 3, **caractérisé en ce que** les porte-doigt (34, 36, 38) sont tous du même type.

5. Convoyeur rotatif (10) selon l'une quelconque des revendications 1 à 4, **caractérisé en ce que** les porte-doigt (34, 36, 38) sont montés sur l'axe (32) par l'intermédiaire de plusieurs éléments. (42) annulaires, écartés les uns des autres dans le sens axial.

6. Convoyeur rotatif (10) selon l'une quelconque des revendications 1 à 5, **caractérisé en ce que** les porte-doigt (34, 36, 38) s'étendent sur la partie de la largeur du corps (12), munie de doigts (16).

7. Convoyeur rotatif (10) selon l'une quelconque des revendications 1 à 6, **caractérisé en ce que** les doigts (16) sont fixés de manière amovible sur le porte-doigt (34, 36, 38).

8. Convoyeur rotatif (10) selon la revendication 7, **caractérisé en ce que** les doigts (16) sont vissés dans des orifices du porte-doigt (34, 36, 38).

9. Convoyeur rotatif (10) selon la revendication 8, **caractérisé en ce que** les doigts (16) sont bloqués par des contre-écrous (44) sur le porte-doigt (34, 36, 38).

10. Moissonneuse-batteuse munie d'un convoyeur rotatif (10) selon l'une quelconque des revendications précédentes, dans laquelle le convoyeur rotatif (10) est fixé à la table de coupe ou au-dessus du secoueur de paille.
